# EUROPEAN PATENT APPLICATION

(11) **EP 0 521 331 A2**
(43) Date of publication of application: **07.01.1993**
(21) Application number: 92110102.8
(22) Date of filing: 16.06.1992
(51) Int. Cl.: A23C 11/10, A23L 1/211

(54) **Soy milk fermentation process**

(30) Priority: 19.06.1991 EP 91201563
(71) Applicant: N.V. VANDEMOORTELE INTERNATIONAL, B-8500 Kortrijk (BE)
(72) Inventor: De Buyser, Dirk, B-8210 Zedelgem (BE)

(57) **Abstract**

The present invention relates to a soy milk fermentation process, in which the inoculum comprises at least two different lactic acid producing bacterial strains, one of which being Lactococcus lactis subsp. lactis var. diacetylactis, for preparing yoghurt-like food products and products thus obtained. The fermentation process comprises the steps of inoculating soy milk, in which optionally additional ingredients are mixed, allowing a fermentation time sufficient for adequate acid production and cooling the fermented product to below 10°C after an optional heat treatment.

## Description

The invention relates to a soy milk fermentation process, in which the inoculum comprises at least two different lactic acid producing bacterial strains, one of which being Lactococcus lactis subsp. lactis var. diacetylactis, for preparing yoghurt-like food products and products thus obtained.

Soy milk is a milk-like food product which has in the past ten years been adopted as common nutrition. However, the major drawbacks to the use of soy milk, or soybean derived food products in general, are its beany taste and objectionable odour and colour. These objections are found to limit consumption of soy milk in populations other than those accustomed to soybean derived food.

In order to overcome these disadvantages, it has been proposed by Mital and Steinkraus to subject soybeans, either before or during blanching, to a heat treatment, to inactivate lipoxygenase, which enzyme is thought to be responsible for development of undesirable flavours by degradation or oxidation of lipids (Journal of Food Protection, 42 1979, No.11, 895-899, Fermentation of Soy Milk by Lactic Acid Bacteria. A Review). A second approach involves the complete extraction of lipids to remove the substrate which leads to development of the above mentioned off-flavours (US-Patent 3,721,569). Finally, fermentation of soy milk with common yoghurt cultures has been observed to reduce its beany flavour.

This third approach has the additional advantage to provide a product with improved texture and prolonged shelflife by adequate acid production. Those advantages, as well as the elimination of the beany flavour, can make this product acceptable to Western standards.

According to US Patent 3,937,843, beany flavour is eliminated from soy milk by subjecting the latter, in the presence of added saccharide, to a lactic acid fermentation until its acidity is less than or equal to 4 and removing the flavours by steam distillation. Although the product thus obtained exhibits a reduced beany taste, still it is not acceptable because, during the distillation step, most of the valuable taste components are removed. Furthermore, because of relatively high operational costs, this method has never been run on industrial scale.

A method of producing a fermented soy milk product, avoiding the high operation costs, has been described in US Patent 4,664,919. In this process, a newly discovered bacterium, Streptococcus sojalactis, is used. This fermentation process is claimed to yield a yoghurt-like product with acceptable taste and flavour.

In European Patent Application EP 0 386 817, a method is described in which soy milk is allowed to ferment with exocellular polysaccharide forming lactic acid bacteria. Similarly, fermentation of soy milk with a mixed culture of Streptococcus lactis, Leuconostoc cremoris and Leuconostoc dextranicum (which latter is an exocellular polysaccharide forming lactic acid bacterium) was reported by Patel and Sen Gupta (Journal of Food Protection, 45 1982, Nr.7, p.620-623, Fermentation of Blanched-Bean Soy milk with Lactic Cultures).

A culture comprising Streptococcus lactis and Streptococcus cremoris is known for use in conventional cow's milk cheese-making or buttermilk-making processes (for instance from EP 0 111 020). However, it has been found that no satisfactory product could be obtained from soy milk by conventional cheese-making processes (Obara, T., 1968; Basic investigations on the development of foods from enzymatically treated soybean protein concentrates to increase use of United States soybeans in Japan. U.S. Dept. Agr., Final Technical Report PL 480 Project UR-A11(40)26). Obara therefore suggested to treat the curd obtained by salt precipitation of soy milk with proteolytic enzymes before inoculating with Streptococcus cremoris and Streptococcus lactis. Because of the considerable number of operational steps, this process never gained interest amongst soy milk manufacturers.

It has now surprisingly been found that a yoghurt-like product can be obtained by fermenting soy milk with a bacterial culture comprising at least two lactic acid producing strains, one of which being Lactococcus lactis subsp. lactis var. diacetylactis, which product exhibits much better taste and smell compared to presently known fermented soy milk products and which has a texture closely resembling that of dairy yoghurt.

The process according to our invention can advantageously be applied for fermenting soy milk as obtained by any conventional method. Such methods generally entail washing, dehulling, grinding, homogenization and decantation.

The mixed bacterial culture to be used for the process according to our invention comprises at least two lactic acid producing strains, one of which being Lactococcus lactis subsp. lactis var. diacetylactis. Apart from Lactococcus lactis subsp. lactis var. diacetylactis, the mixed bacterial culture may comprise for instance Lactococcus lactis subsp. lactis or Lactococcus lactis subsp. cremoris or mixtures thereof. In this specification, all bacterial strains referred to are type strains, which type strains are e.g. available to anyone applying for a sample at Depository Institutions under the Budapest Treaty.

The mixed bacterial culture preferably comprises Lactococcus lactis subsp. lactis var. diacetylactis as well as Lactococcus lactis subsp. lactis and Lactococcus lactis subsp. cremoris. The culture even more preferably comprises Lactococcus lactis subsp. lactis var. diacetylactis and Lactococcus lactis subsp. cremoris for at least 30 % plate count taken together, whereas Lactococcus lactis subsp. lactis may not exceed 70 % plate count.

The bacterial culture can be added as living bacteria or in a freeze dried state. The bacterial count of the soy milk mixture allowed to ferment should range between 10^3 to 10^9, depending on the type of inoculum applied.

Lactococcus species generally require carbohydrates for fermentation. Consequently, the growth of Lactococcus species shall be poor and the soy milk shall not sufficiently gel if the amount of carbohydrates naturally present in soy milk is to small. Accordingly, it may be desirable to add a supplemental carbon source. It is immaterial which carbon source is added, but mono- or disaccharides, especially fructose, are preferred. The final sugar concentration should range between 0.1 and 5 % by weight of the soy milk.

In addition, we have found that minor amounts (generally ranging from 0.01 to 1 % by weight) of edible organic acids, e.g. citric acid, or their salts, e.g. sodium citrate, further increase flavour production during fermentation.

The time required for sufficient acid production depends on the type and the amount of inoculum applied. As a general rule, fermentation is allowed to proceed until the acidity of the fermenting mixture has reached a pH below 5.5, preferably between 4 and 5, which generally lasts from 5 to 24 hours at a temperature ranging from 15 to 35°C, preferably ranging from 20 to 30°C. Each bacterial culture has its optimum growth conditions and these conditions are usually aimed at. The soy product thus obtained can also be subjected to a heat treatment for destruction of microorganisms.

After fermentation and optional heat treatment, the fermented soy milk product is preferably stored at a temperature below 15°C, preferably between 0 and 10°C, before consumption.

The creamy flavoured yoghurt-like food product thus obtained can be consumed as such, or can be further processed. It is possible to mix the fermented soy milk with fruit (in the form of pieces, pulp and/or juice), edible fibers, flavouring agents, colouring agents and other functional additives. It is also possible to mix these ingredients with soy milk prior to fermentation. Stabilizers may in some cases be necessary for preserving the aggregated, presenting yoghurt-like properties.

The invention is further illustrated by the following examples.

### Example 1

In this example, the importance of the composition of the mixed bacterial culture is illustrated.

To 8000 ml soy milk (Provamel, ex. Alpro-Wevelgem, Belgium), having a fat content of 184 gr., a protein content of 320 gr., a total sugar content of 64 gr. (of which only 16 gr. are digestible) and a pH of 7.2, fructose was added, bringing the total carbohydrate content to 400 gr., as well as citric acid to lower the pH to about 6.5 and minor amounts (approximately 5 gr.) of sodium chloride.

1000 ml samples of this mixture were inoculated with bacterial cultures of different composition and allowed to ferment at 25°C during 10 hours. The fermentation was stopped by lowering the temperature to below 5°C for at least 1 hour, and the flavour of the eight samples were evaluated by a trained taste panel. This taste panel consisted of 10 judges who had all demonstrated the ability to distinguish correctly the intensity of beany flavour in different dilutions of the same soy milk sample. The judges were asked to score the samples (10 points indicating the total abscence of beany flavour to 1 point for a very strong beany flavour). The mean sensory scores are summarized in table 1.

**Table 1**

| Sample | bacterial culture | mean sensory score |
|---|---|---|
| Sample 1 | Lactococcus lactis subsp. lactis DSM 20481 (A) | 2.9 |
| Sample 2 | Lactococcus lactis subsp. cremoris DSM 20069 (B) | 5.1 |
| Sample 3 | Lactococcus lactis subsp. lactis var. diacetylactis DSM 20661 (C) | 5.9 |
| Sample 4 | mixed culture of A and B (1:1) | 4.9 |
| Sample 5 | mixed culture of B and C (1:1) | 8.3 |
| Sample 6 | mixed culture of A and C (1:1) | 7.8 |
| Sample 7 | mixed culture of A, B and C (1:1:1) | 9.1 |
| Sample 8 | mixed culture of A, B and C (5:4:1) | 9.3 |

From the above table it is clear that the composition of the bacterial culture influences the flavour of the fermentation product very significantly. Although very good results are obtained in samples 5 and 6, which samples were inoculated with mixed bacterial cultures comprising Lactococcus lactis subsp. lactis var. diacetylactis, even better results are observed in samples 7 and 8. There appears to occur a synergetic effect between the strains comprised in the mixed cultures which comprise Lactococcus lactis subsp. lactis var. diacetylactis.

### Example 2

In this example the influence of the fermentation temperature is illustrated. Seven 1000 ml samples, prepared as above, were inoculated with a mixed bacterial culture comprising Lactococcus lactis subsp. lactis (DSM 20481), Lactococcus lactis subsp. lactis var. diacetylactis (DSM 20661) and Lactococcus lactis subsp. cremoris (DSM 20069) (5:1:4) and allowed to ferment at different temperatures during 10 hours. The fermentation was stopped by lowering the temperature to below 5°C for at least 1 hour, and the flavour of the samples were evaluated as above. The mean sensory scores are summarized in table 2.

**Table 2**

| Sample | fermentation temperature | mean sensory score |
|---|---|---|
| Sample 1 | 10°C | 5.2 |
| Sample 2 | 15°C | 8.0 |
| Sample 3 | 20°C | 8.9 |
| Sample 4 | 25°C | 9.3 |
| Sample 5 | 30°C | 8.7 |
| Sample 6 | 35°C | 7.0 |
| Sample 7 | 37°C | 5.5 |

From this example it is clear that the fermentation is preferably carried out between 15 and 35°C, and even more preferably between 20 and 30°C.

### Example 3

In this example the influence of the substrate is illustrated. Therefore, to soy milk (Provamel, ex. Alpro-Wevelgem, Belgium), different amounts of various carbohydrates and citric acid to a pH of 6.5 were added.

1000 ml samples of these substrate preparations were inoculated with a mixed bacterial culture comprising Lactococcus lactis subsp. lactis (DSM 20481), Lactococcus lactis subsp. cremoris (DSM 20069) and Lactococcus lactis subsp. lactis var. diacetylactis (DSM 20661) (5:4:1), and allowed to ferment at 25°C during 8 hours, whereupon the fermentation was stopped, and the flavours were evaluated as in the above examples. The mean sensory scores are summarized in table 3.

**Table 3**

| Sample | carbohydrate | mean sensory score |
|---|---|---|
| Sample 1 | fructose 1 wt% | 8.5 |
| Sample 2 | fructose 3 wt% | 9.1 |
| Sample 3 | fructose 5 wt% | 9.2 |
| Sample 4 | glucose 1 wt% | 8.0 |
| Sample 5 | glucose 3 wt% | 8.3 |
| Sample 6 | glucose 5 wt% | 8.8 |
| Sample 7 | sucrose 3 wt% | 7.2 |
| Sample 8 | sucrose 5 wt% | 7.3 |
| Sample 9 | ------ ------ | 6.8 |

From this example it is clear that the type and the amount of carbohydrate added to soy milk influence the flavour of the product obtained. Best results are obtained with monosaccharides, especially fructose.

### EXAMPLE 4

In this example the influence of the fermentation time is illustrated. Therefore, 1000 ml samples prepared as in example 1 were inoculated with a mixed bacterial culture comprising Lactococcus lactis subsp. lactis (DSM 20481), Lactococcus lactis subsp. cremoris (DSM 20069) and Lactococcus lactis subsp. lactis var. diacetylactis (DSM 20661) (5:4:1), and allowed to ferment at 25°C during different periods of time. The mean sensory scores are summarized in table 4.

**Table 4**

| Sample | fermentation time (hours) | final pH | mean sensory score |
|---|---|---|---|
| Sample 1 | 3 | 5.7 | 5.0 |
| Sample 2 | 5 | 5.2 | 7.1 |
| Sample 3 | 7 | 4.9 | 9.2 |
| Sample 4 | 9 | 4.6 | 9.4 |
| Sample 5 | 11 | 4.5 | 9.2 |
| Sample 6 | 13 | 4.4 | 9.1 |
| Sample 7 | 15 | 4.3 | 9.2 |
| Sample 8 | 18 | 4.3 | 9.0 |
| Sample 9 | 21 | 4.2 | 8.8 |
| Sample 10 | 24 | 4.2 | 8.9 |
| Sample 11 | 27 | 4.1 | 8.7 |

From the above example it is clear that the fermentation time is not critical with respect to the flavour of the fermented product. However, the lower limit fermentation period appears to be somewhere between 3 and 5 hours.

## Claims

1. Process for the fermentation of soy milk, characterized in that soy milk is inoculated with a bacterial culture comprising at least two lactic acid producing bacterial strains, one of which being Lactococcus lactis subsp. lactis var. diacetylactis, and allowed to ferment.

2. Process according to claim 1, characterized in that the mixed bacterial culture comprises at least three lactic acid producing bacterial strains, one of which being Lactococcus lactis subsp. lactis var. diacetylactis.

3. Process according to claims 1-2, characterized in that the mixed bacterial culture comprises Lactococcus lactis subsp. lactis, Lactococcus lactis subsp. cremoris, and Lactococcus lactis subsp. lactis var. diacetylactis.

4. Process according to claim 3, characterized in that the mixed bacterial culture comprises Lactococcus lactis subsp. cremoris and Lactococcus lactis subsp. lactis var. diacetylactis for at least 30 % plate count taken together, whereas the amount of Lactococcus lactis subsp. lactis may not exceed 70 % plate count.

5. Process according to any of the above claims,
characterized in that the inoculated mixture is allowed to ferment for a period of time exceeding 3 hours, preferably ranging from 7 to 18 hours, at a temperature ranging from 15 to 35°C, preferably between 20 and 30°C.

6. Process according to any of the above claims,
characterized in that, prior to the inoculation, carbohydrates are added to the soy milk, preferably monosaccharides and even more preferably fructose, making up a total carbohydrate content ranging from 0.1 to 5 wt%.

7. Process according to any of the above claims,
characterized in that, prior to inoculation, edible organic acid, preferably citric acid, is added to the soy milk, to increase its acidity to a pH ranging from 6.0 to 6.8.

8. Process according to any of the above claims,
characterized in that the fermentation is stopped by lowering the temperature to below 10°C, preferably between 0 and 10°C.

9. Process according to any of claims 1-7, characterized in that the fermentation is stopped by increasing the temperature to above 65°C, preferably ranging from 85 to 105°C, for a period of time sufficient to deactivate microorganisms contained in the fermented product.

10. A food product essentially consisting of a yoghurt-like food product obtainable according to any one of the above claims.
